# EUROPEAN PATENT APPLICATION

(11) **EP 4 597 243 A1**
(43) Date of publication of application: **06.08.2025**
(21) Application number: 24155223.1
(22) Date of filing: 01.02.2024
(51) Int. Cl.: G05B 19/406, G05B 23/02, G06N 20/00, B04B 1/00, B65G 43/02, G06N 3/08

(54) **METHOD, COMPUTER PROGRAM, CONTROL COMPUTING SYSTEM AND INDUSTRIAL SEPARATOR FOR PREDICTING A BELT WEAR SCORE OF A DRIVE BELT FOR DRIVING A BOWL OF AN INDUSTRIAL SEPARATOR**

(71) Applicant: GEA Westfalia Separator Group GmbH, 59302 Oelde (DE)
(72) Inventor: IRRGANG, Sven, 59302 Oelde (DE); WESSEL, Simon, 59269 Beckum (DE)
(74) Representative: Bardehle Pagenberg Partnerschaft mbB Patentanwälte Rechtsanwälte

(57) **Abstract**

The present disclosure relates to a computer-implemented method for predicting a belt wear score of a drive belt for driving a bowl of an industrial separator, the method comprising: obtaining, from the industrial separator, a plurality of operational parameters during a separation process; inputting the plurality of operational parameters into a trained machine learning model; and predicting, using the trained machine learning model, the belt wear score of the drive belt. The present disclosure further relates to a corresponding control computing system, an industrial separator, a computer-implemented method for training the machine learning model and a trained machine learning model.

## Description

### Technical field

The present invention relates to a computer-implemented method for predicting a belt wear score of a drive belt for driving a bowl of an industrial separator as well as to a corresponding computer program, control computing system and industrial separator. The present invention also relates to a computer-implemented method for training a machine learning model configured to predict a belt wear score of a drive belt for driving a bowl of an industrial separator and a corresponding computer program.

### Technical background

Centrifugal separators are used in various settings to separate a fluid mixture into its components. The separation process is based on the centrifugal force, a pseudo-force, which pushes an object that is moving in a circular path away from the center of the rotation. The main components of a centrifugal separator typically comprise a rotating bowl, also referred to as drum, and a drive mechanism such as a hydraulic drive, a variable frequency drive or a belt drive mechanism. Due to their simplicity and cost-effectiveness, belt drive mechanisms are currently the most common drive mechanism for powering centrifugal separators.

During the separation process, a fluid mixture is entered into a bowl of a centrifugal separator. Simultaneously, a motor is rotating the bowl of the separator using a drive mechanism, such as a belt drive. In other words, the motor is driving the belt and the belt is driving the bowl of the separator. This imparts a rotation to the bowl and leads the fluid mixture in the bowl to move in a circular path which provides the conditions for the centrifugal force to act. More specifically, the centrifugal force acts radially outward which causes the components of the fluid mixture that have a higher density to migrate away from the center and towards the edges of the bowl, effectively separating the fluid mixture into its components. Once this separation step is completed, the components having a higher density are collected/ejected along at the outer wall of the bowl while the remaining components are exited through a designated outlet.

Such centrifugal separation processes heavily rely on the interaction between the rotating bowl of the separator and the drive mechanism. This is because the rotation that is imparted on the bowl by the drive mechanism directly influences the strength of the centrifugal force generated within the bowl which is used to separate the fluid mixture. Accordingly, it is of outmost importance to maintain the drive mechanism in good operating condition.

A main component of the belt drive mechanism is a flat belt. Oil mist in the drive chamber of the separator may accumulate on the drum and motor treads coupling to the drive belt. Oil mist reduces friction between the belt and the treads resulting in decreased force transfer between the motor and the bowl and deterioration of the belt material and is one of the most common causes of belt wear. To ensure efficiency and avoid accidents, flat belts are subject to a regular maintenance/change cycle. Typically, an operating instruction manual specifies the frequency at which the drive belt should be replaced. However, actual deterioration of the drive belt may typically take place over a longer period. Thus, accurately assessing the condition of the drive belt provides an opportunity to prolong the safe use of the belt.

Currently, visual assessment of the belt during standstill of the separator is the conventional method for inspecting the condition of the belt or level of belt wear. This method has several disadvantages. For example, the visual assessment method is only possible when the separator is at a standstill which is undesirable, especially in an industrial setting. Moreover, when done manually, visual inspection is time consuming and prone to human error. It requires service personnel to make a subjective judgement of the condition of the belt which leads to inconsistent results, i.e., one inspector might find a belt to be in good condition while another inspector rates the belt as insufficient. In addition, while visual assessment provides an indication of the condition of the belt, it does not always deliver correct results. A small tear might for example not be noticed by service personnel.

In view of these disadvantages, the presently known visual inspection techniques for assessing the condition of a drive belt may not always lead to the desired results. There is thus a need to improve the inspection techniques such that the condition of the belt is estimated more accurately and reliably.

Against this background, an object of the present invention is to address one or more or all of the above-mentioned disadvantages.

### Summary of the invention

The above-mentioned objects and other objects, which become apparent from the following description, are solved by the subject-matter of the independent claims. Preferred embodiments are subject of the dependent claims.

A 1^{st} embodiment of the invention is directed to a computer-implemented method for predicting a belt wear score of a drive belt for driving a bowl of an industrial separator, the method comprising: obtaining, from the industrial separator, a plurality of operational parameters during a separation process; inputting the plurality of operational parameters into a trained machine learning model; and predicting, using the trained machine learning model, the belt wear score of the drive belt.

Obtaining, from the industrial separator, a plurality of operational parameters during a separation process, ensures that the condition assessment of the drive belt is based on most recent operational parameters. This may have the advantage of improving the accuracy of the prediction. It is noted that the wear of a drive belt can be derived based on operational parameters obtained during the operation of a separator since the separation process and consequently the operational parameters derived from this process depend on the condition of the drive belt. More specifically, operational parameters may have the advantage of being directly related to the condition of the belt and thus may be advantageous as an input parameter for predicting the condition. This advantage may be further reinforced through obtaining the parameters during the separation process. Such an assessment of the belt's condition may be a further advantage that arises from obtaining data during the separation process.

Using the trained machine learning model to predict the belt wear score of the drive belt may improve accuracy of the prediction. Moreover, using a machine learning model may be advantageous in recognizing patterns within the input data, i.e., the operational parameters. Those patterns can in turn be used to improve overall prediction accuracy. Similarly, the machine learning model may improve handling of complex relationships between different input parameters which may again lead to a higher prediction accuracy. In addition, the use of a machine learning model may mitigate or even eliminate human bias when evaluating the condition of the drive belt.

Predicting the belt wear score may have the advantage of improving maintenance of the belt. For instance, the drive belt is not replaced after a predefined period of time but rather when replacement is required based on the condition of the belt. Thus, a further advantage of predicting the belt wear score is the postponement of replacement, which may lead to increased lifetime of the drive belt. This in turn may lead to a higher machine uptime, higher throughput and cost savings on service. Moreover, maintenance may be improved since machine shutdowns may be arranged and scheduled more efficiently due to the predicted belt wear score. In addition, predicting the belt wear score may lead to prevention of drive belt failure. This has the advantage of preventing further machine damage in auxiliary units and prevent loss of production.

According to a 2^{nd} embodiment, obtaining, from the industrial separator, the plurality of operational parameters further comprises: obtaining, from a motor of the industrial separator for driving the drive belt, a motor current; and obtaining, from a sensor of the bowl, a rotation speed of the bowl of the industrial separator.

An advantage of obtaining, from a motor of the industrial separator for driving the drive belt, a motor current may be that the parameter is closely related to the condition of the drive belt and therefore suitable as an input parameter. In other words, the motor current provides an indication of the condition of the drive belt. More specifically, the separation process requires the bowl of the separation unit to achieve a rapid acceleration during a separation phase and a rapid deacceleration during a discharge cycle. This rapid acceleration and deacceleration of the bowl is powered by the motor in combination with the belt drive mechanism, such operations (i.e., constant acceleration and deacceleration) lead to a constant change in force applied to the belt and put an increased amount of stress on the drive belt which impacts the condition of the drive belt. In addition, if a belt is worn, changes in the aforementioned parameters may be detected since, e.g., a higher motor current is required to drive the bowl when the belt is worn compared to a new belt. More generally speaking, using the motor current and/or the bowl speed as operational parameters for the machine learning model may improve overall accuracy of the prediction that the model is performing.

Similarly, obtaining, from a sensor of the bowl, a rotation speed of the bowl of the industrial separator may have the advantage of improving the accuracy of the prediction performed by the machine learning model. This is because the speed of the bowl is directly correlated to the condition of the drive belt and thus functions as a suitable input parameter. For instance, when a drive belt is worn down, the rotation speed of the bowl of the industrial separator might be lower even though the same motor current is applied to the belt.

In general, both the motor current and the rotation speed of the bowl provide the advantage of increasing accuracy of the prediction. Another advantage of both operational parameters may be that it does not require retrofitting of the industrial separator since these parameters are generally obtainable from the built-in sensors of industrial separators.

According to a 3^{rd} embodiment, obtaining, from the industrial separator, the plurality of operational parameters further comprises: sampling, each of the plurality of operational parameters during a discharge cycle of the industrial separator; wherein the separator is a self-cleaning industrial separator.

Sampling each of the plurality of operational parameters during a discharge cycle may provide the advantage of obtaining data that is relevant for evaluating the condition of the drive belt. More specifically, before a discharge, a lot of product has been build up on the inside of the bowl wall. During the discharge of the product, a great amount of mass leaves the bowl which causes the bowl to rapidly deaccelerate. After the discharge of product, the motor re-accelerates the bowl. As the motor experience a drop in speed it increases its power (which can for example be measured in motor current) to re-accelerate the bowl. This rapid acceleration is putting a lot of stress on the drive belt. Thus, it may be advantageous to sample each of the plurality of operational parameters (i.e., analyzing the data profile) during a discharge cycle to evaluate the condition of the drive belt.

Self-cleaning industrial separators may provide the advantage of having a discharge cycle which may occur in regular intervals and has the purpose of ejecting separated material that has collected on the inner wall of the bowl. Having a discharge cycle may be advantageous since the ejection requires deacceleration during which measurements of operational parameters can take place. Thus, since it may advantageous to sample the plurality of operational parameters during a discharge cycle, it may be advantageous to use self-cleaning industrial separators which perform said discharge cycle during which the plurality of operational parameters may be obtained.

Further, sampling each of the plurality of operational parameters may provide the advantage of being cost-effective and requiring fewer resources. Moreover, sampling ensures feasibility of the obtaining of the plurality of operational parameters. In addition, sampling may improve interpretation of the behavior of the operational parameter that is being sampled. In general, the overall accuracy of the prediction is improved due to sampling of the plurality of operational parameters.

According to a 4^{th} embodiment, the method further comprising: deriving, based on the predicted belt wear score of the drive belt, a remaining lifetime.

Deriving a remaining lifetime of the drive belt based on the predicted belt wear score may have the advantage of representing the prediction in a manner which improves subsequent actions. For instance, maintenance personnel may be more inclined to perform service when the lifetime of the belt is clearly identified. Thus, deriving the remaining lifetime of the drive belt may reinforce the advantages mentioned above regarding improvements to maintenance and prevention of downtime and machine damage.

According to a 5^{th} embodiment, the method further comprising: displaying the predicted belt wear score of the drive belt and/or the derived remaining lifetime via a graphical user interface, GUI.

Displaying the predicted belt wear score and/or the derived remaining lifetime via a graphical user interface may have the advantage of providing a easy-to-understand overview of the belt condition. Moreover, displaying the predicted and derived information via a graphical user interface may improve actionability by personnel, such as maintenance workers. Overall, the use of a graphical user interface for displaying the predicted belt wear score and/or the derived remaining lifetime may lead to the above-mentioned advantages of improving maintenance and the lifetime of the drive belt and preventing downtime and machine damage.

According to a 6^{th} embodiment, predicting, using the trained machine learning model, the belt wear score of the drive belt further comprises: extracting, using a first component of the machine learning model, features from the plurality of operational parameters; predicting, using a second component of the machine learning model, the belt wear score based on the extracted features.

Using a first component of the machine learning model to extract features from the plurality of operational parameters may have the advantage of mitigating or even eliminating human bias. For instance, a human might be biased to always take the average of each operational parameter as a feature. The first component of the machine learning model does not exhibit such bias and merely extracts the features that lead to an improved performance. Moreover, using the first component of the machine learning model to perform feature extraction may be more efficient than manual feature extraction. In addition, the first component of the machine learning model may be able to recognize complex patterns from the input data which would not have been recognized otherwise and lead to an increased accuracy in predicting the belt's condition.

Using a second component of the machine learning model that is based on the extracted features to predict the belt wear score may have the advantage of having a dedicated second component for the prediction process.

Finally, having a first component for extracting features and a second component for predicting the belt wear score may be advantageous in that each component can be optimized for its respective task. For instance, when implementing the solution, the first component can be trained on a different algorithm than the second component that is optimized for the purpose of feature extraction.

According to a 7^{th} embodiment, wherein the first component of the machine learning model is a neural network, preferably a convolutional neural network (CNN); and/or wherein the second component of the machine learning model is based on a classification algorithm, preferably a support vector machine (SVM) or a self-organizing map (SOM).

Using a neural network as the first component of the machine learning model may have the above-mentioned advantages of eliminating or even mitigating human bias. In addition, using a neural network may increase the overall accuracy of the machine learning model. Further, using a convolutional neural network as a first component of the machine learning model, i.e., for feature extraction, may be advantageous since convolutional neural networks work well with sequential data such as sensor readings over a period of time. Thus, convolutional neural networks may be especially well-suited to process the operational parameters which form the basis for the prediction of the belt wear score.

Using a machine learning model that is based on a classification algorithm may provide the advantage of improved prediction accuracy.

Moreover, making use of a support vector machine may provide the advantage of dealing well with high-dimensional data (i.e., reaching a high prediction accuracy even if the information is complex). In addition, support vector machines offer various kernel functions that can be used to transform the input in terms of operational parameters into higher-dimensional spaces. This improves the ability to capture complex relationships between parameters. Another advantage of support vector machines is that they may be comparatively resistant against overfitting. This might be especially important when the training data set is rather small. In general, support vector machines have the advantage of performing well on small to medium sized data sets and being suitable for sparse datasets. Finally, using a support vector machine to predict the belt wear score may have the advantage of being robust against outliers.

Using self-organizing maps as a second component of the machine learning model may provide the advantage of being an effective classification algorithm. Moreover, self-organizing maps may improve understandability of the results of the classification. This may, among others, be due to their visualization properties. In addition, self-organizing maps perform unsupervised learning. This provides the advantage of not requiring a label for a training sample. While supervised learning algorithms require a sample and an attached label, self-organizing maps merely require the sample itself. This may be advantageous where labels are simply not available or where labeling the samples would have to be conducted manually.

An 8^{th} embodiment of the invention is directed to a control computing system for predicting a belt wear score of a drive belt for driving a bowl of an industrial separator, preferably of a self-cleaning industrial separator, the control computing system comprising means for performing the method of any one of the preceding embodiments 1 to 7.

A 9^{th} embodiment of the invention is directed to an industrial separator comprising or communicatively coupled to a control computing system according to embodiment 8.

An industrial separator, preferably a self-cleaning industrial separator, that comprises the control computing system according to embodiment 8 may have the advantage of providing security since sensitive operational parameters are processed locally. In addition, a further advantage of the separator comprising the control computing system may be low latency due to a reduced transfer time of the operational parameters to the control computing system. Moreover, independence from network connectivity might be a further advantage from the industrial separator comprising the control computing system.

An industrial separator that is communicatively coupled to the control computing system according to embodiment 8 may have the advantage of executing any one of the embodiments 1 to 7 in a distributed manner. For instance, the operational parameters can be obtained at the separator and send to a cloud server where the machine learning model that performs the prediction is run. This feature thus provides flexibility with regards to the architectural landscape of information technology. In addition, a distributed environment may provide the advantage of being easily scalable, for example in cases where the demand for computing power increases. In addition, the same control computing system may be used to monitor a plurality of industrial separators.

A 10^{th} embodiment of the invention is directed to a computer-implemented method for training a machine learning model configured to predict a belt wear score of a drive belt for driving a bowl of an industrial separator, preferably a self-cleaning industrial separator, the method comprising: obtaining training data from a plurality of industrial separators comprising a plurality of parameter sets comprising at least one of: a motor current from a motor of the plurality of industrial separators; a rotation speed of the bowl of the plurality of industrial separators from a sensor of the bowl; training the machine learning model based on the training data to generate a trained core machine learning model.

The above-mentioned advantages, especially the advantages mentioned when describing embodiment 1 and 2, apply to this embodiment. Moreover, training the machine learning model based on the training data to generate a trained core machine learning model may have the advantage of achieving a general-purpose model that performs well on different populations of separators (i.e., providing a high generalizability). A further advantage of training a core machine learning model may be that the model may be adopted throughout the industry due to its high generalizability. Moreover, the trained core machine learning model can later be adapted to make belt wear predictions for specific domains, e.g., for specific types of separators or specific production environments of the separators. Such adaptation may provide the advantage of requiring less resources and especially training data than training a model from scratch.

According to an 11^{th} embodiment, the method further comprises: obtaining further training data from one or more industrial separators of a same type comprising a plurality of parameter sets comprising at least one of: a motor current from a motor of the one or more industrial separator; a rotation speed of the bowl of the one or more industrial separators from a sensor of the bowl; retraining the trained core machine learning model based on the further training data to generate a separator-type-dependent trained machine learning model.

The above-mentioned advantages, especially the advantages mentioned when describing embodiment 1 and 2, apply to this embodiment. Moreover, retraining the trained core machine learning model based on the further training data to generate a separator-type-dependent trained machine learning model may have the advantage of being computationally efficient. This is because the separator-type-dependent trained machine learning model does not have to be trained from scratch but makes use of the pre-trained core model. For instance, while the pre-trained core model may take a large amount of training data and a considerable time to train, the separator-type-dependent trained machine learning model may be trained with a smaller amount of training data and training time. Accordingly, a further advantage of retraining the trained core machine learning model may be the small amount of training data that is required to train the separator-specific model. A further advantage of retraining the trained core machine learning model is that this technique allows the construction of models that are specialized in predicting the belt wear score for a specific separator type, which may lead to an increased prediction accuracy.

According to a 12^{th} embodiment, predicting, using the trained machine learning model, the belt wear score of the drive belt further comprises: extracting, using a first component of the machine learning model, features based on the plurality of parameter sets; predicting, using a second component of the machine learning model, the belt wear score based on the extracted features.

The above-mentioned advantages, especially the advantages outlined with respect to embodiment 6, apply to this embodiment.

According to a 13^{th} embodiment, wherein the first component of the machine learning model is a neural network, preferably a convolutional neural network (CNN); and/or wherein the second component of the machine learning model is based on a classification algorithm, preferably a support vector machine (SVM) or a self-organizing map (SOM).

The above-mentioned advantages, especially the advantages outlined with respect to embodiment 7, apply to this embodiment.

According to a 14^{th} embodiment, a trained machine learning model configured to predict a belt wear score of a drive belt for driving a bowl of an industrial separator, preferably a self-cleaning industrial separator, wherein the machine learning model is trained according to the method of any one of the preceding embodiments 10 to 13.

A 15^{th} embodiment of the invention is directed to a computer program comprising instructions which, when executed by a computer, cause the computer to carry out the method of any one of embodiments 1 to 7 or 10 to 13.

### Brief description of the figures

Various aspects of the present invention are described in more detail in the following by reference to the accompanying figures without the present invention being limited to the embodiments of these figures.
- Fig. 1: illustrates an industrial separator according to an embodiment of the present invention;
- Fig. 2: illustrates exemplary operational parameters according to an embodiment of the present invention;
- Fig. 3: illustrates a support vector machine according to an embodiment of the present invention;
- Fig. 4: illustrates an exemplary process of training a core machine learning model and retraining the core machine learning model to arrive at a separator specific model according to an embodiment of the present invention.
- Fig. 5: illustrates an example of heatmap that could be part of a graphical user interface according to an embodiment of the present invention;
- Fig. 6: illustrates a further example of a graphical user interface according to an embodiment of the present invention;
- Fig. 7: illustrates an example of a self-organizing map according to an embodiment of the present invention.

### Detailed description of preferred embodiments

In the following, the invention is described with reference to the accompanying figures in more detail. However, the present invention can also be used in other embodiments not explicitly disclosed hereafter. As detailed below, the embodiments are compatible with each other, and individual features of one embodiment may also be applied to another embodiment.

Throughout the figures and description, the same reference numerals refer to the same elements, unless stated otherwise. The figures may not be drawn to scale, and the relative size, proportions, and depiction of elements in the figures may be exaggerated for the purpose of clarity, illustration, and convenience. The figures do not limit the scope of the claims but merely support the understanding of the invention.

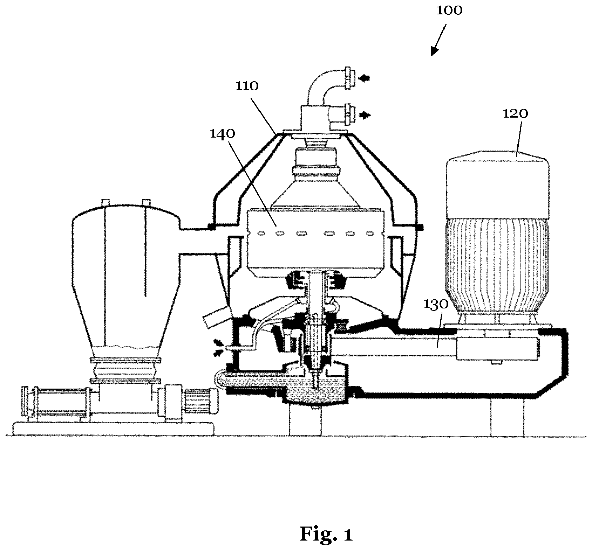

Fig. 1 shows a schematic view of a self-cleaning centrifugal industrial separator 100. The industrial separator 100 comprises two main components, a separation unit 110 whose purpose it is to perform the separation process and a motor 120 whose purpose it is to provide the power for the separation unit 110 to perform the separation process. As can be seen in Fig. 1, the motor 120 uses a drive belt 130 mechanism to power the industrial separator. More specifically, the drive belt 130 mechanism is designed to transfer rotational energy from the motor 120 to the separation unit 110. The use of a drive belt 130 mechanism provides design flexibility in that different-sized pulleys can be used at the separation unit 110 and the motor 120 to achieve different speeds. Moreover, the drive belt 130 mechanism allows the separation unit 110 and the motor 120 to be arranged in various configurations.

At the separation unit 110, the rotational energy is used to spin a bowl 140, also referred to as a drum, which leads the fluid mixture inside of the bowl to separate due to centrifugal forces that act upon the fluid mixture. For instance, in the dairy industry, the industrial separator can be used to separate milk (i.e., fluid mixture) into cream and skimmed milk. Another example would be the beverage industry, where the industrial separator can be used to separate a fermented liquid (i.e., fluid mixture) such as beer into the desired liquid and the remaining yeast and impurities. In detail, during a separation phase, the bowl 140 is spinning rapidly which leads dense particles such as cream and yeast/impurities to accumulate along the edge of the bowl 140. The separation phase is followed by a discharge cycle during which the particles that have accumulated along the edge of the bowl 140 are ejected.

This process requires the bowl 140 of the separation unit 110 to achieve a rapid acceleration during the separation phase and a rapid deacceleration during the discharge cycle. This rapid acceleration and deacceleration of the bowl 140 is powered by the motor 120 in combination with the belt drive 130 mechanism, such operations (i.e., constant acceleration and deacceleration) lead to a constant change in force applied to the belt 130 and put an increased amount of stress on the drive belt 130. Accordingly, drive belts 130 are service components of the industrial separator 100 which require regular maintenance and replacement. If not replaced in time, drive belts 130 may slip off the pulley or snap and can cause severe damage and production downtime. Thus, it is important to be aware of the condition of the drive belt 130.

Operational parameters that are collected during the above-described separation process can be used to draw conclusions about the condition of the drive belt 130. For instance, it may be advantageous to use machine learning to analyze the collected operational parameters. The motor current that the motor 120 is using to power the industrial separator 100 and the rotation speed of the bowl 140 are two operational parameters suitable for evaluating the condition of the drive belt 130. An advantage of using the motor current of the motor 120 and the rotation speed of the bowl 140 as operational parameters may be that no retrofitting of the machine is required, since such parameters may qualify as standard readings from sensors that are included in almost all separators. More specifically, a power meter is typically measuring the energy consumption of the motor 120 that is driving the belt 130, while a speed sensor is a standard implementation to measure the rotational speed of the bowl 140. Nonetheless, the industrial separator 100 could be retrofitted with additional sensors to provide for instance information about vibration and/or impedance which may further improve the analysis of the drive belt's 130 condition.

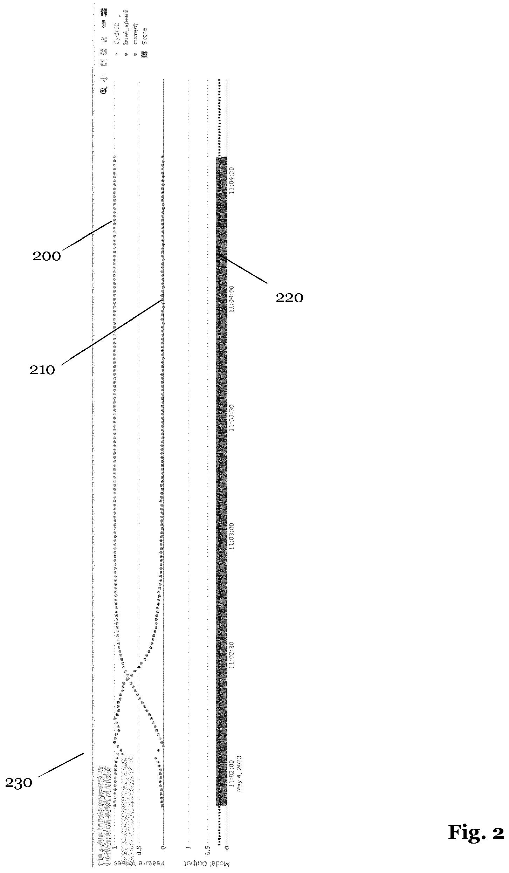

Fig. 2 visualizes normalized values for motor current 210 and bowl speed 200 as two exemplary input parameters to a machine learning model as well as the output which describes the condition of the drive belt 130 in form of a belt wear score 220. The visualized data can be seen as a sample used for training a machine learning model. In the case of supervised machine learning algorithms, the motor current 210 values and the bowl speed 200 values serve as the input parameters for training the model, while a classification between a normal sample (i.e., no wear) and an anomalous sample (i.e., worn-out) serve as the label. Note that the belt wear score 220 is calculated based on the predicted classification, for example through scaling. In case of unsupervised machine learning model algorithms, no labels are required and the motor current 210 values and bowl speed 200 serve as input parameters. The visualized data of Fig. 2 can also be seen as a prediction that is made using a trained machine learning model. In this case the motor current 210 values and the bowl speed 200 values serve as input parameters to the trained model based upon which the trained model predicts the belt wear score 220.

The values for the motor current, measured for example in Ampere (A) and the bowl speed, measured for example in revolutions per minute (RPM), are measured during a discharge cycle of the separation process. For instance, the values are measured every second covering a total period of 100 to 180 seconds and may start 10 to 20 seconds before the ejection of the dense particles such as cream or yeast/impurities (see description of Fig. 1 for further explanation) is triggered. Accordingly, the measured operational parameters may be described as sequential data and may be suitable for respective machine learning models that handle such data. As shown in Fig. 2, at the beginning of the discharge cycle, the speed of the bowl 140 is high, while the current of the motor 120 that is powering the bowl 140 is low. The speed of the bowl 140 is high because it is at the end of the separation phase (i.e., rapid spinning of the bowl 140 to separate liquid mixture such as milk or fermented liquid) and the current of the motor 120 is low, because the bowl 140 is already spinning at a high speed and thus no more rotational force is needed to accelerate the bowl 140 at this point. This condition changes instantly when the ejection is triggered 230. Ejecting the dense particles (i.e., cream, yeast/impurities) that accumulated on the edge of the bowl 140, requires the bowl 140 to abruptly stop spinning. Fig. 2 shows that the speed of the bowl 140 rapidly decreases, almost comes to a halt, and then increases again in a curved manner. At the same time, the current of the motor 120 that is powering the process is at its highest level. This can be explained due to the high level of energy that is required to accelerate the bowl 140 again. Since the drive belt 130 is required to transfer the power from the motor 120 to the bowl 140, this process has a particularly pronounced impact on the condition of the drive belt 130. The remaining recorded parameters show that once the bowl 140 is rotating at the desired speed, the current of the motor 120 is close to zero.

The belt wear score 220 may provide an indication about the condition of the drive belt 130. As shown in Fig. 2, the score may range from 0 (= no wear) to 100 (= worn out), where 0 indicates that the belt is new and not worn out at all, 100 indicates that the belt is completely worn out and the values between 0 and 100 such as 70 represent a condition of the belt that is between brand new and completely worn out. In other words, the higher the belt wear score 220 the higher the worse the condition of the drive belt 130 and the higher the slip between the drive belt 130 and the pulley.

It is important to note that the correlation between the current used by the motor 120 and the speed of the bowl 140 during a discharge cycle provide valuable information to assess the condition of the drive belt 130. For instance, if the current of the motor 120 is high but the speed of the bowl is not at the desired level, the drive belt 130 might not adequately transfer the power that is created by the motor 120 to the bowl 140. This might be due to a worn-out condition of the drive belt 130 that leads to less friction and less transfer of power between the motor 120, the belt 130 and the bowl 140.

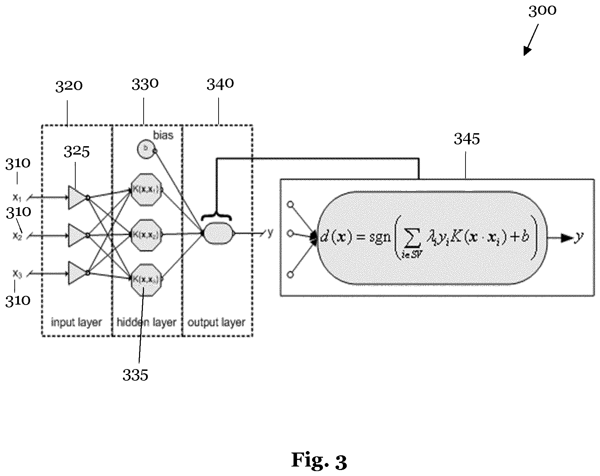

Fig. 3 illustrates a schematic of a two-class support vector machine 300, which is a type of machine learning model that can be used to predict a belt wear score 220 based on operational input parameters such as motor current 210 and bowl speed 200. More specifically, a network structure comprising an input layer 320, one or more hidden layers 330 and an output layer 340 is seen. The implementation of the support vector machine is not limited to the example shown in Fig. 3.

It is to note that the machine learning models used for predicting the belt wear score 220 may generally be based on a classification algorithm. One-class and two-class support vector machines may be used individually or in combination to perform the prediction. The one-class support vector machine is advantageous since it merely requires a single class of samples for the training process. For instance, it might be difficult to obtain operational parameters representing worn-out drive belts since drive belts 130 in this condition pose a threat and are usually maintained/replaced before reaching a worn-out condition. However, if operational parameters from two classes (i.e., drive belt 130 in good condition and drive belt 130 in bad condition) exist, the two-class support vector is advantageous since it provides a more accurate prediction.

Fig. 3 shows that features 310 that are extracted from the operational parameters may be used as an input into the input layer 320. Each feature 310 may correspond to a node 325 of the input layer. In contrast to neural networks, the hidden layers 320 in support vector machine are not explicitly defined. Instead, the support vector machine 300 uses a kernel function 335 such as a gaussian radial basis, sigmoid, linear or polynomial function to transform the input data (i.e., operational parameters) into higher-dimensional space. The output layer 340 of a support vector machine 300 may comprise a single node that represents the decision boundary 345 also referred to as hyperplane that separates the two classes. The output of this node determines the class label that is assigned to the input data. For instance, motor current and bowl speed may serve as input parameters. The trained support vector machine 300 then calculates an output value that determines which class the input parameters belong to (i.e., normal behavior or anomalous behavior). This prediction is then scaled to a value between 0 and 100. The support vector machine 300 aims to find an optimal decision boundary 345 that separates the two classes while minimizing classification errors. Support vectors, which are data points (i.e., vectors of operational parameters) closest to the decision boundary 345 influence the position and orientation of the decision boundary 345 and are an important aspect of the support vector machine 300.

Generally, for predicting the condition of the drive belt 130, it may be advantageous that the machine learning model comprises one or more machine learning models. For instance, the support vector machine 300 could be complemented with a neural network that performs automatic feature extraction. In this case, the neural network (e.g., a convolutional neural network) is used to extract features from the operational parameters. This is advantageous since it mitigates and/or eliminates human biases during feature selection. Those features 310 are then inputted into the input layer 320 as described above and shown in Fig. 3. Convolutional neural networks may be well-suited for the task of feature extraction since they perform well on sequential data, such as sensor readings over time. Using a dedicated machine learning model to perform feature extraction may also be advantageous when additional sensor readings are used in the input data, which are more complex. It might also be advantageous to use deep neural networks for feature extraction.

Self-organizing maps are a further machine learning technique that can be used to predict the condition of the drive belt 130. Self-organizing maps are unsupervised algorithms which means that no labels are required during the training process. This can be advantageous in scenarios where labels are not available or where manually labelling becomes time consuming. In general, various types of classification algorithms can be used to predict the condition of the drive belt 130.

Training data that may be used to train the aforementioned machine learning models, in case of supervised learning, may thus comprise one or more operational parameters, like the motor current and the bowl speed, and a corresponding label classifying the condition and/or wear of the drive belt. Training data may be derived from running separators and manually labeling the obtained parameters. In addition, it is also possible to derive training data from simulating the operation of a separator by means of a separator simulation software.

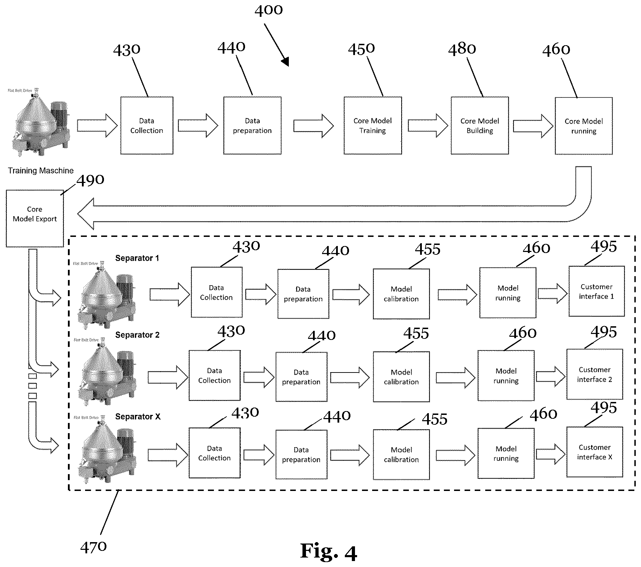

Fig. 4 shows an exemplary training pipeline 400 of a core machine learning model and separator-type specific machine learning models. The training pipeline 400 for each type of model comprises among others a step of data collection 430, a step of data preparation 440, a step of model training 450 / model calibration 455 and a step of model running 460. In addition, there is a model building step 480, a model export step 490 and a step 495 of presenting prediction results on a customer interface.

The data collection step 430 and data preparation step 440 comprise collecting the operational parameters over a period of time to obtain samples and, in case of supervised learning, labeling the collected sample (i.e., drive belt 130 is in good condition vs. drive belt 130 is worn out). An example would be the measurement of motor current 210 and bowl speed 200 during a discharge cycle, as discussed in more detail in Fig. 2. Additional operational parameters such as input flow, back pressure, separated product and density, which may be obtained using sensor measurements may also serve as input parameters to the machine learning model. Additional sensor readings may improve robustness of the model; however, it may be advantageous to limit the input parameter to input parameters that are available by default (i.e., no retrofitting of the industrial separator). Another option may be to use simulated data as input data to the machine learning model. Such simulated data may be generated by using a test machine. Moreover, a plurality of samples may be collected from a plurality of types of separators which has the advantage of improving generalizability and accuracy of the prediction. In addition, the plurality of samples may be generated over a longer period of time from at least one industrial separator in an operational environment to represent the natural wear of a drive belt 130. Another part of the data preparation step 440 comprises pre-filtering the input data using visualization techniques such as heatmaps. Moreover, a pre-screening of the data may be performed using statistical values (i.e., average) of the input data and comprises grouping and further examining samples that qualify as outliers. Moreover, a trained professional may analyze the operational parameters for anomalies. For instance, the professional might check speed drop, recover time and current peak for motor current 210 and bowl speed 200. The professional might also perform crosschecking the time stamp of the ejection data profile with auxiliary sensor values such as feed flow and bowl back pressure to accurately label data.

Feature extraction and data splitting precedes the training step 450. Feature extraction comprises the identification and selection of relevant features which may be based on statistical values such as minimum, maximum, count and mean or specific characteristics that are defined by trained professionals. It is to note that, as described in Fig. 3, feature extraction can also be performed using a dedicated machine learning model such as a convolutional neural network. Data splitting which refers to dividing the data for training, testing and validation may also be applied. During the training step 450 two types of problems can be solved, a primal problem which aims at minimizing the classification error (e.g., using a hinge loss) or a dual problem which also aims at minimizing the classification error but does so while maximizing an objective function using the Lagrange multipliers. Finally, an anomaly threshold is set that determines which samples are considered normal and which samples are considered to be anomalies. The threshold may be based on the samples distance from the decision boundary. Finally, the performance of the model may be evaluated using the validation data set and metrics such as precision, recall, F1-score, or area under the ROC curve (AUC). Moreover, the model's generalization capabilities and potential issues such as overfitting or underfitting may be identified.

The retraining step 470 allows the trained core machine learning model to be scaled and applied to other production processes (e.g., liquid feeds in beverage, food and/or dairy) and/or separator types (e.g., varying drum size and/or capacity, 2-phase separation, 3-phase separation) that may be operated via a drive belt 130 mechanism. This may be inter alia achieved by performing a model calibration according to step 455, which may be considered as retraining the core model based on training data that relate to a specific separator type. More specifically, the trained core machine learning model may be duplicated and retrained on an additional training dataset based on operational parameters obtained from other separation processes/separator types. Note that the retraining may not require samples from both classes (i.e., normal and anomalous) but may only be performed on samples that are classified as "normal". For instance, a new separator may be set up and collect operational data for a period of time upon commissioning. It can be assumed that the drive belt 130 is in good condition during this period of time and thus all samples can automatically be labeled as "normal" or "good condition". This is advantageous since it removes the need for manual labeling and also the human bias that might come from human labeling. During retraining, the decision boundary 345 or hyperplane of the trained core machine learning model is adjusted to reflect the operational data from the new separator. Note that retraining 470 may have several advantages over training a model from scratch such as less required resources, less required training data and faster training time.

In addition, the machine learning model may be further improved through the addition of historical data to the training set. For instance, longitudinal historic data about operational parameters during the discharge cycle or belt wear score prediction that were made by the model. Moreover, the model may be adapted to predict a time period until the next required maintenance.

During step 480, the core model is built, e.g., the trained core mode is stored for being used in conjunction with a separator.

The model running step 460 may comprise the deployment of the trained machine learning model in the operating environment of the industrial separator to perform predictions on unseen data. The trained machine learning model might be deployed and stored on a local processor in a local area network (LAN) configuration in close proximity to the machine. This might be advantageous with regards to security concerns. A further option may be to deploy and store the trained machine learning model remotely, wherein the separatory is operatively connected via an internet link to a remote processing service such as a "cloud service". The cloud service system may be accessed by the machine operator via a personal login with credentials to reach information related to the separator. In addition, the operator may configure the system to send notifications (e.g., e-mail, text message) in case of an anomalous operating situation.

During the model export step 490 the model may be exported to be retrained using training data from various separators. In step 495, prediction results may be provided to a customer interface such that an operator of the machine may review or obtain the prediction results.

Additionally, the operator may have the opportunity to configure the system to send notification such as an E-Mail alert or text message in case of a critical anomalous operating situation is detected. Such notification may also be sent directly to a trusted service provider. This may be advantageous since the service provider may directly take action to perform services such as ordering spare parts, scheduling maintenance and adjusting operating parameters. In case of a locally operated system, the notification may be transported via data exchange to a SCADA system and/or a dashboard solution. Accordingly, the machine learning model may be used in conjunction with a reporting functionality that prompts human interaction and further improves maintenance of the drive belt 130.

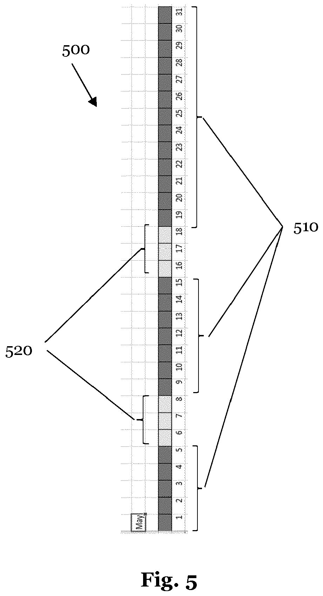

Fig. 5 provides an example of a heatmap that may be part of a graphical user interface (GUI) dashboard. More specifically, the trained machine learning model may be deployed such that the condition of the belt may be evaluation for each discharge cycle. The resulting belt wear score (i.e., condition of the belt) may be presented in a chronological timeline 500. Fig. 5 shows a summary of the belt's condition per day starting on the 1^{st} of May and ending on the 31^{st} of May. A daily belt wear score may be calculated based on the average of the individual belt wear scores for each discharge cycle for that day. The daily summary may avoid an information overload that could be created if the belt wear score were to be presented for each discharge cycle. However, the user may still be able to select a specific day and may then be presented with the individual belt wear scores for that day. Accordingly, the daily belt wear score may serve as an abstraction of the individual belt wear scores to aid understanding. The GUI dashboard may be advantageous in providing an easy overview of the belt's condition which may lead to faster reaction time by the personnel. Moreover, the GUI dashboard might have an interactive user interface which may provide an operating advantage, as an operator may click on a specific day (e.g., 1^{st} of May) to obtain more granular information about the drive belt's condition for that day. This presentation may be advantageous since it may enable the operator to gain a quick overview of the condition of the belt but also access more detailed information if necessary.

The predicted belt wear scores may, for instance, be categorized in three different groups: a belt wear score between 0 and 20 if the belt is in good condition according to score groups 510, a belt wear score between 21 and 49 if there is the belt is lightly worn according to score groups 520 and a belt wear score between 50 and 100 if wear is detected. If a light wear or wear is detected, an e-mail or SMS may be generated and sent to a specific contact person and the local maintenance service. In case that wear is detected, such messages may receive a high priority indication. In Fig. 5, it can be seen that a color indicating the wear of the belt has been allocated to each day of the month adhering to the principles discussed above.

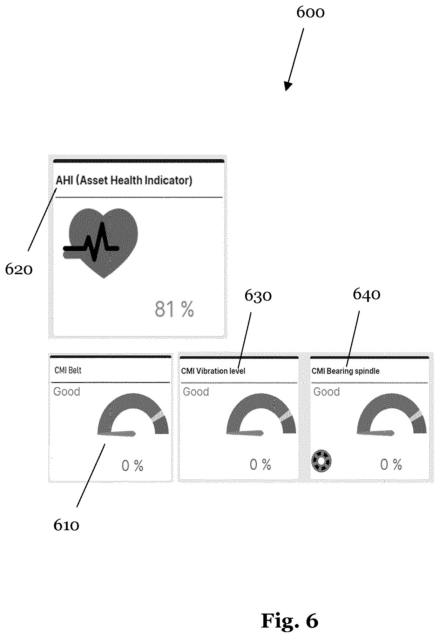

Fig. 6 illustrates an exemplary graphical user interface 600 that displays information about the condition of the separator. The belt wear score 610 may be combined with other values that may provide information about the separator. The Asset Health Indicator 620 may represent the general condition of the separator. It may consist of various parameters such as machine condition based on machine vibration data 630, service intervals, bearing conditions 640. Through the Asset Health Indicator 620, an operator may easily assess the condition of the machine avoiding an overload of information. This may consequently improve the uptime of the machine for example due to smart decision making as to when to schedule maintenance. Other than the indicators shown in Fig. 6, the predicted remaining lifetime of the belt may also be displayed on the graphical user interface 600. The remaining lifetime could be understood as a number of day, hours of operation and/or a number of discharge cycles before the drive belt requires replacement and/or maintenance. This provides the advantage of easily identifying the number of discharge cycles that the drive belt may still safely operate.

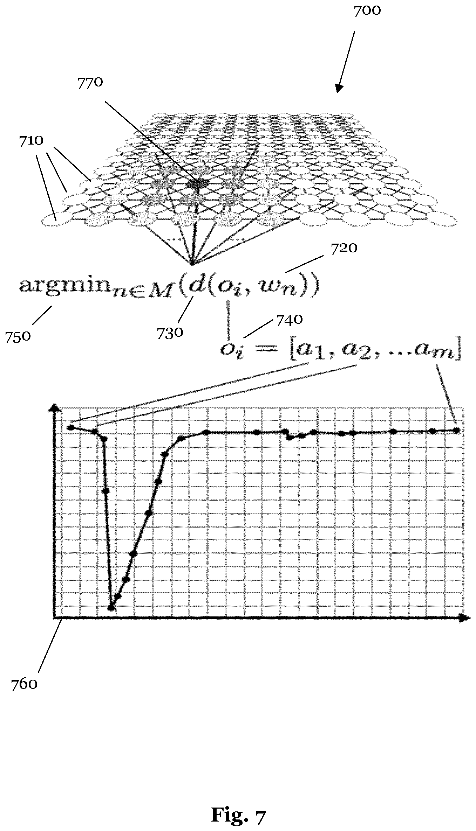

Fig. 7 visualizes a self-organizing map 700, wherein the self-organizing map is made up of a two-dimensional grid in which neurons 710 are arranged. A weight vector 720 *wₙ* is allocated to each neuron 710 *n* ∈ *M.* Moreover, a distance measurement function 730 *d*(*x, y*) such as Euclidean distance and/or cosine distance is used to determine a best matching unit (BMU) 770 of an input vector 740. The best matching unit 770 is calculated by minimizing the distance measurement 750. Fig. 7 visualizes that the input vector *oᵢ* consists of *m* measurements obtained during the discharge cycle. The graph 760 illustrates the bowl speed over time. Accordingly, the first element *a*₁ of the input vector *oᵢ* represents the bowl speed at an early moment in the discharge cycle while the last element *aₘ* represents the bowl speed at a later moment in the discharge cycle. The graph 760 shows that the bowl speed drops rapidly at the beginning of the discharge cycle and then rises rapidly until the bowl speed stays approximately constant. During training a best matching unit 770 for each input vector *oᵢ* is determined and the weights are adapted accordingly. Note that in the example, one self-organizing map is trained for each parameter. In other words, there is one self-organizing map for motor current and one self-organizing map for bowl speed. The two maps are aggregated in a later step.

Embodiments of the present disclosure may be realized in any of various forms, e.g., in software. For example, in some embodiments, the present invention may be realized as a computer-implemented method, a computer-readable memory medium, or a computer system. In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

**List of reference signs**
- 100: industrial separator
- 110: separation unit
- 120: motor
- 130: drive belt
- 140: bowl
- 200: bowl speed
- 210: motor current
- 220, 610: belt wear score
- 230: ejection triggered
- 300: support vector machine
- 310: features
- 320: input layer
- 325: node
- 330: hidden layers
- 335: kernel function
- 340: output layer
- 345: decision boundary
- 400: training pipeline
- 430: data collection step
- 440: data preparation step
- 450: training step
- 455: calibration step
- 460: model running step
- 470: retraining step
- 480: building step
- 490: model export step
- 495: step for providing results to customer interface
- 500: chronological timeline
- 510: score group
- 520: score group
- 600: graphical user interface
- 620: Asset Health Indicator
- 630: machine vibration data
- 640: bearing condition
- 700: self-organizing map
- 710: neuron
- 720: weight vector
- 730: distance function
- 740: input vector
- 750: minimizing distance measurement
- 760: graph

## Claims

1. A computer-implemented method for predicting a belt wear score (220) of a drive belt (130) for driving a bowl (140) of an industrial separator, the method comprising:
obtaining, from the industrial separator, a plurality of operational parameters during a separation process;
inputting the plurality of operational parameters into a trained machine learning model; and
predicting, using the trained machine learning model, the belt wear score (220) of the drive belt (130).

2. The method of the preceding claim, wherein obtaining, from the industrial separator, the plurality of operational parameters further comprises:
obtaining, from a motor (120) of the industrial separator for driving the drive belt (130), a motor current (210); and
obtaining, from a sensor of the bowl, a rotation speed (200) of the bowl of the industrial separator.

3. The method of any one of the preceding claims, wherein obtaining, from the industrial separator, the plurality of operational parameters further comprises:
sampling, each of the plurality of operational parameters during a discharge cycle of the industrial separator;
wherein the separator is a self-cleaning industrial separator.

4. The method of any one of the preceding claims, the method further comprising:
deriving, based on the predicted belt wear score (220) of the drive belt (130), a remaining lifetime.

5. The method of claim 4, the method further comprising:
displaying the predicted belt wear score (220) of the drive belt (130) and/or the derived remaining lifetime via a graphical user interface, GUI (600).

6. The method of any one of the preceding claims, wherein predicting, using the trained machine learning model, the belt wear (220) score of the drive belt (130) further comprises:
extracting, using a first component of the machine learning model, features from the plurality of operational parameters;
predicting, using a second component of the machine learning model, the belt wear score (220) based on the extracted features.

7. The method of the preceding claim, wherein the first component of the machine learning model is a neural network, preferably a convolutional neural network, CNN; and/or
wherein the second component of the machine learning model is based on a classification algorithm, preferably a support vector machine, SVM, or a self-organizing map, SOM.

8. A control computing system for predicting a belt wear score (220) of a drive belt (130) for driving a bowl (140) of an industrial separator, preferably of a self-cleaning industrial separator, the control computing system comprising means for performing the method of any one of the preceding claims 1 to 7.

9. An industrial separator comprising or communicatively coupled to a control computing system according to claim 8.

10. A computer-implemented method for training a machine learning model configured to predict a belt wear score (220) of a drive belt (130) for driving a bowl (140) of an industrial separator, preferably of a self-cleaning industrial separator, the method comprising:
obtaining training data from a plurality of industrial separators comprising a plurality of parameter sets comprising at least one of:
a motor current (210) from a motor (120) of the plurality of industrial separators;
a rotation speed (200) of the bowl (140) of the plurality of industrial separators from a sensor of the bowl;
training the machine learning model based on the training data to generate a trained core machine learning model.

11. The method of the preceding claim further comprises:
obtaining further training data from one or more industrial separators of a same type comprising a plurality of parameter sets comprising at least one of:
a motor current (210) from a motor (120) of the one or more industrial separators;
a rotation speed (200) of the bowl (140) of the one or more industrial separators from a sensor of the bowl;
retraining the trained core machine learning model based on the further training data to generate a separator-type-dependent trained machine learning model.

12. The method of any one of the preceding claims 10 or 11, wherein predicting, using the trained machine learning model, the belt wear score (220) of the drive belt (130) further comprises:
extracting, using a first component of the machine learning model, features based on the plurality of parameter sets;
predicting, using a second component of the machine learning model, the belt wear score (220) based on the extracted features.

13. The method of the preceding claim, wherein the first component of the machine learning model is a neural network, preferably a convolutional neural network, CNN; and/or
wherein the second component of the machine learning model is based on a classification algorithm, preferably a support vector machine (300), SVM, or a self-organizing map, SOM.

14. A trained machine learning model configured to predict a belt wear score (220) of a drive belt (130) for driving a bowl (140) of an industrial separator, preferably of a self-cleaning industrial separator, wherein the machine learning model is trained according to the method of any one of the preceding claims 10 to 13.

15. A computer program comprising instructions which, when executed by a computer, cause the computer to carry out the method of any one of claims 1 to 7 or 10 to 13.
